# EUROPEAN PATENT APPLICATION

(11) **EP 4 718 269 A1**
(43) Date of publication of application: **01.04.2026**
(21) Application number: 25205343.4
(22) Date of filing: 29.09.2025
(51) Int. Cl.: G06F 13/38, G06F 13/40, G06F 13/42

(54) **HOST SYSTEM, DEVICE SYSTEM, DATA TRANSFER METHOD, STORAGE MEDIUM, AND COMPUTER PROGRAM PRODUCT**

(30) Priority: 30.09.2024 CN 202411392380
(71) Applicant: Amlogic (Shanghai) Co., Ltd, Shanghai 201203 (CN)
(72) Inventor: HU, Jinghua, Shanghai (CN); SHI, Ming, Shanghai (CN); ZHANG, Yong, Shanghai (CN); XU, Hui, Shanghai (CN); ZHONG, Wei, Shanghai (CN); ZHOU, Zhen, Shanghai (CN)
(74) Representative: Maiwald GmbH

(57) **Abstract**

A host system (10), a device system, a data transfer method, a storage medium, and a computer program product are provided. The data transfer method includes: initiating, by a host controller, a data transfer transaction, where each data transfer transaction includes a start-of-frame packet indicating a beginning of the data transfer transaction, a USB standard-based protocol interval exists between two adjacent start-of-frame packets, and when the host controller sends a plurality of data transfer transactions, an interval between two adjacent start-of-frame packets is less than the protocol interval; and performing a physical connection between a host physical layer (103) and a device physical layer to implement a data transfer, where the data transfer has a USB standard-based protocol symbol rate, and during the physical connection, a symbol rate of the data transfer is greater than the protocol symbol rate. The present invention improves USB data transfer efficiency.

## Description

### TECHNICAL FIELD

Embodiments of the present invention relate to the technical field of image processing, and in particular, to a host system, a device system, a data transfer method, a storage medium, and a computer program product.

### BACKGROUND

A Universal Serial Bus (USB) is a widely used communications protocol between a computer and an external device. After released in 1996, the USB has become a standard interface connecting various devices (such as a keyboard, a mouse, a printer, an external hard disk drive, a digital camera, a smartphone, and a tablet computer) to a computer. The USB technology greatly simplifies a connection between a computer and an external device, so that a user no longer worries about the problem of compatibility between different devices.

### SUMMARY

The problem to be solved by embodiments of the present invention is to provide a host system, a device system, a data transfer method, a storage medium, and a computer program product, which are beneficial to the improvement of USB data transfer efficiency.

In order to solve the above problem, the embodiments of the present invention provide a USB connection-based host system, including: a host protocol layer configured to define a data transfer transaction initiated by a host controller, where each data transfer transaction includes a start-of-frame packet indicating a beginning of the data transfer transaction, the host protocol layer is further configured to define a protocol interval between two adjacent start-of-frame packets, and the host protocol layer is further configured to define a protocol symbol rate for a data transfer on a host physical layer; the host controller configured to drive initiation of the start-of-frame packet, so that an interval between two adjacent start-of-frame packets initiated by the host controller is less than the protocol interval; and the host physical layer configured to drive a data transfer and a physical connection to a device physical layer, so that a symbol rate of the data transfer on the host physical layer is greater than the protocol symbol rate.

Correspondingly, the embodiments of the present invention further provide a device system connected to the host system provided in the embodiments of the present invention, including: a device physical layer configured to implement a data transfer and a physical connection to a host physical layer, so that a symbol rate of the data transfer on the device physical layer is greater than the protocol symbol rate; and a device controller configured to receive and parse a data transfer transaction from a host controller.

Correspondingly, the embodiments of the present invention further provide a USB connection-based data transfer method, including: initiating, by a host controller, a data transfer transaction, where each data transfer transaction includes a start-of-frame packet indicating a beginning of the data transfer transaction, a USB standard-based protocol interval exists between two adjacent start-of-frame packets, and when the host controller sends a plurality of data transfer transactions, an interval between two adjacent start-of-frame packets is less than the protocol interval; and performing a physical connection between a host physical layer and a device physical layer to implement a data transfer, where the data transfer has a USB standard-based protocol symbol rate, and during the physical connection, a symbol rate of the data transfer is greater than the protocol symbol rate.

Correspondingly, the embodiments of the present invention further provide a device, including at least one memory and at least one processor, where the memory stores one or more computer instructions, and the one or more computer instructions are executed by the processor to implement the USB connection-based data transfer method provided in the embodiments of the present invention.

Correspondingly, the embodiments of the present invention further provide a storage medium, storing one or more computer instructions, where the one or more computer instructions are used for implementing the USB connection-based data transfer method provided in the embodiments of the present invention.

Correspondingly, the embodiments of the present invention further provide a computer program product, including a computer program/instructions, where the computer program/instructions, when executed by a processor, implement the USB connection-based data transfer method provided in the embodiments of the present invention.

Compared with the prior art, the technical solutions of the embodiments of the present invention have the following advantages: In the USB connection-based host system provided in the embodiments of the present invention, the host controller is configured to drive the initiation of the start-of-frame packet, so that the interval between two adjacent start-of-frame packets initiated by the host controller is less than the protocol interval; and the host physical layer is configured to drive the data transfer and the physical connection to the device physical layer, so that the symbol rate of the data transfer on the host physical layer is greater than the protocol symbol rate. In the embodiments of the present invention, the host controller makes the interval between two adjacent start-of-frame packets initiated less than the protocol interval, to reduce time occupied by each data transfer transaction. In addition, the symbol rate of the data transfer on the host physical layer is greater than the protocol symbol rate. The symbol rate is increased to match the shortened interval between two adjacent start-of-frame packets, increasing a USB data transfer rate of the host system without modifying the host protocol layer, thereby improving USB data transfer efficiency of the host system while keeping the cost relatively low.

In the device system provided in the embodiments of the present invention that is connected to the host system provided in the embodiments of the present invention, the device physical layer is configured to implement the data transfer and the physical connection to the host physical layer, so that the symbol rate of the data transfer on the device physical layer is greater than the protocol symbol rate. In the embodiments of the present invention, the symbol rate of the data transfer on the device physical layer is greater than the protocol symbol rate. The symbol rate is increased to match a data transfer rate of the host system connected to the device system, so that a USB data transfer rate can be increased.

In the USB connection-based data transfer method provided in the embodiments of the present invention, when the host controller sends the plurality of data transfer transactions, the interval between two adjacent start-of-frame packets is less than the protocol interval, and during the physical connection, the symbol rate of the data transfer is greater than the protocol symbol rate. In the embodiments of the present invention, the interval between two adjacent start-of-frame packets initiated by the host controller is less than the protocol interval, to reduce time occupied by each data transfer transaction. In addition, the symbol rate of the data transfer between the host physical layer and the device physical layer is greater than the protocol symbol rate. The symbol rate is increased to match the shortened interval between two adjacent start-of-frame packets, increasing a USB data transfer rate without modifying the host protocol layer configured to define the host controller, thereby improving USB data transfer efficiency while keeping the cost relatively low.

### BRIEF DESCRIPTION OF THE DRAWINGS

FIG. 1 is a functional block diagram of an embodiment of a USB connection-based host system according to the present invention;
FIG. 2 is a functional block diagram of an embodiment of a USB connection-based device system according to the present invention;
FIG. 3 is a flowchart of an embodiment of a USB connection-based data transfer method according to the present invention;
FIG. 4 to FIG. 5 are comparative diagrams of handshakes in an embodiment of a USB connection-based data transfer method according to the present invention; and
FIG. 6 is a structural diagram of hardware of an embodiment of a device according to the present invention.

### DETAILED DESCRIPTION

It can be seen from the background that, although having a low price currently, the USB 2.0 has a speed that cannot satisfy requirements of some applications, particularly requirements of devices requiring higher transfer speeds. A current technical bottleneck is a limitation on the speed of the USB 2.0. Although providing a higher speed, the USB 3.0 is expensive and has high power consumption and an excessively high speed. Compared with some devices, the USB 3.0 has a problem of surplus performance.

Therefore, a new solution is required to increase the speed of the USB 2.0, so as to satisfy requirements of more application scenarios and avoid the problem in the USB 3.0.

In order to solve the above technical problems, the embodiments of the present invention provide a USB connection-based host system, including: a host protocol layer configured to define a data transfer transaction initiated by a host controller, where each data transfer transaction includes a start-of-frame packet indicating a beginning of the data transfer transaction, the host protocol layer is further configured to define a protocol interval between two adjacent start-of-frame packets, and the host protocol layer is further configured to define a protocol symbol rate for a data transfer on a host physical layer; the host controller configured to drive initiation of the start-of-frame packet, so that an interval between two adjacent start-of-frame packets initiated by the host controller is less than the protocol interval; and the host physical layer configured to drive a data transfer and a physical connection to a device physical layer, so that a symbol rate of the data transfer on the host physical layer is greater than the protocol symbol rate.

In the embodiments of the present invention, the host controller makes the interval between two adjacent start-of-frame packets initiated less than the protocol interval, to reduce time occupied by each data transfer transaction. In addition, the symbol rate of the data transfer on the host physical layer is greater than the protocol symbol rate. The symbol rate is increased to match the shortened interval between two adjacent start-of-frame packets, increasing a USB data transfer rate of the host system without modifying the host protocol layer, thereby improving USB data transfer efficiency of the host system while keeping the cost relatively low.

To make the foregoing objectives, features, and advantages of the embodiments of the present invention more apparent and easier to understand, specific embodiments of the present invention are described in detail below with reference to the accompanying drawings.

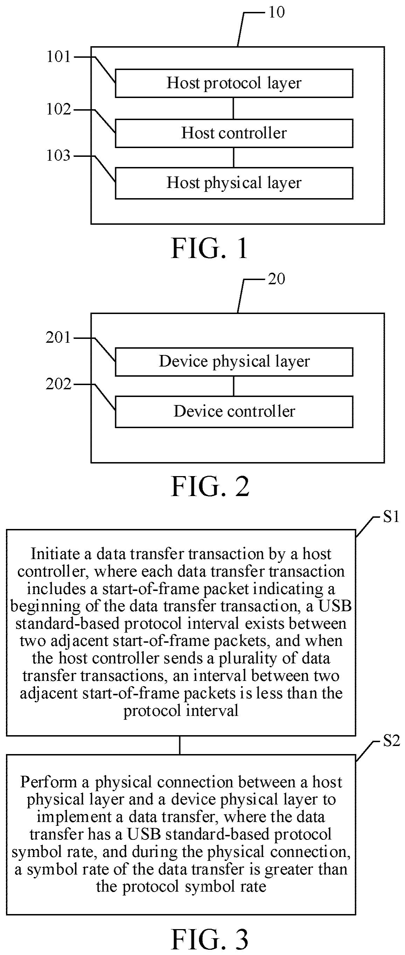

FIG. 1 is a functional block diagram of an embodiment of a USB connection-based host system according to the present invention.

Referring to FIG. 1, the USB connection-based host system 10 includes: a host protocol layer 101 configured to define a data transfer transaction initiated by a host controller, where each data transfer transaction includes a start-of-frame packet indicating a beginning of the data transfer transaction, the host protocol layer 101 is further configured to define a protocol interval between two adjacent start-of-frame packets, and the host protocol layer 101 is further configured to define a protocol symbol rate for a data transfer on a host physical layer; the host controller 102 configured to drive initiation of the start-of-frame packet, so that an interval between two adjacent start-of-frame packets initiated by the host controller 102 is less than the protocol interval; and the host physical layer 103 configured to drive a data transfer and a physical connection to a device physical layer, so that a symbol rate of the data transfer on the host physical layer 103 is greater than the protocol symbol rate.

A Universal Serial Bus (USB) is a widely used communications protocol between a computer and an external device.

In this embodiment, the USB connection-based host system 10 is configured to be connected to a USB connection-based device system.

The host protocol layer 101 is configured to define the data transfer transaction initiated by the host controller, where each data transfer transaction includes the start-of-frame packet indicating the beginning of the data transfer transaction, the host protocol layer 101 is further configured to define the protocol interval between two adjacent start-of-frame packets, and the host protocol layer 101 is further configured to define the protocol symbol rate for the data transfer on the host physical layer.

The host protocol layer 101 is configured to define a format of data transferred by the host controller, a transfer type, a behavior of software, and the like.

Specifically, data is transferred by means of a plurality of data transfer transactions. Each data transfer transaction includes the start-of-frame (SOF) packet indicating the beginning of the data transfer transaction, that is, the start-of-frame packet is at the beginning of each data transfer transaction. As an example, the SOF packet includes a 11-bit frame number field, and increments every frame and rolls over once it reaches a maximum value. By parsing frame number information in the SOF packet, the host system 10 may synchronize time and detect a possible frame loss.

The host protocol layer 101 is further configured to define the protocol interval between two adjacent start-of-frame packets. That is, the host protocol layer 101 defines that the SOF packets are to be sent by the host controller at a fixed time interval, to facilitate establishment of precise time synchronization between the host system 10 and the device system. The protocol interval is an interval defined by the host protocol layer 101, and may not be an interval between two adjacent start-of-frame packets actually initiated by the host controller.

In this embodiment, the USB connection-based host system 10 is based on a USB standard of USB 2.0.

Based on the USB standard of USB 2.0, a data transfer speed can be increased based on the USB 2.0, making the cost of the host system 10 in this embodiment relatively low, and eliminating the problem of surplus performance.

Specifically, in this embodiment, the protocol interval between two adjacent start-of-frame packets that is defined by the host protocol layer is 125 µs.

That is, the protocol interval between two adjacent start-of-frame packets is one micro-frame.

In this embodiment, the data transfer transaction defined by the host protocol layer 101 is applicable to a control transfer mode, a bulk transfer mode, an interrupt transfer mode, and an isochronous transfer mode. As an example, in this embodiment, the data transfer transaction is applicable to a bulk transfer transaction.

The bulk transfer transaction is an important data transfer manner in a USB port protocol, and may be used for full-speed (FS), high-speed (HS), and super-speed (SS) USB devices. In this embodiment, the host system 10 is configured to perform a high speed (HS) transfer. The bulk transfer is applicable to a transfer of a large amount of data.

In this embodiment, the data transfer transaction further includes a token packet, a data packet, and a handshake packet sequentially following the start-of-frame packet.

Specifically, the token packet includes an OUT packet, an IN packet, a SOF packet, and a SETUP packet, and is initiated only by the host system 10, where the SOF packet is the start-of-frame packet. For example, when the host system 10 initiates the OUT packet, it indicates that the device system is notified. In this case, the host system 10 sends data to the device system. The IN packet is used by the host system 10 to request data from the device system. The SETUP packet is used only in an enumeration stage, and is used by the host system 10 to read basic configuration information of the device system.

The data packet includes a DATA0 packet, a DATA1 packet, a DATA2 packet, and an MDATA packet. The DATA0 packet and the DATA1 packet are basic data packet identifiers, and the DATA0 packet and the DATA1 packet appear alternately in an actual data transfer. The DATA2 packet is mainly used for an isochronous transfer. The MDATA packet is used for a split transfer or an isochronous transfer.

The handshake packet includes an ACK packet, a NAK packet, a STALL packet, and an NYET packet. The ACK packet is used for telling a sender that a receiver has received data. The NAK packet is used by a receiver to tell a sender that the receiver currently cannot receive data or that a problem exists in received data. The STALL packet indicates that a current endpoint is terminated. The NYET packet indicates that a receiver does not respond.

The host physical layer (PHY) 103 is configured to drive the data transfer and the physical connection to the device physical layer, so that the symbol rate of the data transfer on the host physical layer 103 is greater than the protocol symbol rate.

Specifically, the host physical layer 103 defines an electrical parameter, a physical speed, and the like of a signal, and is responsible for implementing transmission and receiving of a USB signal on a physical layer.

In this embodiment, the protocol symbol rate is 480 Mbps.

The host controller 102 is configured to drive the initiation of the start-of-frame packet, so that the interval between two adjacent start-of-frame packets initiated by the host controller 102 is less than the protocol interval.

In this embodiment, the host controller 102 makes the interval between two adjacent start-of-frame packets initiated less than the protocol interval, to reduce time occupied by each data transfer transaction. In addition, the symbol rate of the data transfer on the host physical layer 103 is greater than the protocol symbol rate. The symbol rate is increased to match the shortened interval between two adjacent start-of-frame packets, increasing a USB data transfer rate of the host system 10 without modifying the host protocol layer 101, thereby improving USB data transfer efficiency of the host system 10 while keeping the cost relatively low.

In this embodiment, the interval between two adjacent start-of-frame packets initiated by the host controller 102 is half the protocol interval.

That is, by means of driving of the host controller 102, the interval between two adjacent start-of-frame packets actually initiated by the host controller 102 is enabled to be half the protocol interval.

Specifically, in this embodiment, the interval between two adjacent start-of-frame packets initiated by the host controller 102 is 62.5 µs.

In this embodiment, the symbol rate of the data transfer on the host physical layer 103 is twice the protocol symbol rate.

That is, by means of driving of the host physical layer 103, the actual symbol rate of the data transfer is twice the protocol symbol rate.

Specifically, in this embodiment, symbol rates of data transfers on a sending end and a receiving end of the host physical layer 103 are both 960 Mbps.

The symbol rates of the data transfers on the sending end and the receiving end of the host physical layer 103 are both 960 Mbps, which can match the interval of 62.5 µs between two adjacent start-of-frame packets initiated by the host controller 102.

In this embodiment, a maximum data packet length of a bulk transfer in a high-speed mode supported by the host system 10 is 512 bytes. Correspondingly, a number of bulk data packets that can be inserted between the two adjacent start-of-frame packets initiated by the host controller is 13.

That is, in this embodiment, the interval between two adjacent start-of-frame packets initiated by the host controller 102 is reduced to be half the interval under the USB 2.0 standard, that is, 62.5 µs. In addition, 13 bulk data packets can still be inserted between the two adjacent start-of-frame packets initiated by the host controller 102, thereby increasing the transfer rate to be twice of a transfer rate under the USB 2.0 standard.

Specifically, the interval between two adjacent start-of-frame packets initiated by the host controller 102 is reduced to 62.5 µs, and upon calculation, it is found that an effective data transfer speed for each type of data payload is doubled. Moreover, in a bulk transfer transaction under the USB 2.0 standard, a micro-frame bandwidth of each transfer occupies 8%, and in the bulk transfer transaction of this embodiment, a micro-frame bandwidth of each transfer still occupies 8%. The number of transfers in a micro-frame is the same as that under the USB 2.0 standard, while a transfer speed is twice that under the USB 2.0 standard. Therefore, this embodiment enables the transfer speed to be doubled, and is completely compatible with the existing protocol of the USB 2.0 standard, keeping the cost relatively low.

FIG. 2 is a functional block diagram of an embodiment of a device system connected to the host system in the foregoing embodiment according to the present invention.

Referring to FIG. 2, a USB connection-based device system 20 includes: a device physical layer 201 configured to implement a data transfer and a physical connection to a host physical layer, so that a symbol rate of the data transfer on the device physical layer 201 is greater than a protocol symbol rate; and a device controller 202 configured to receive and parse a data transfer transaction from a host controller.

A Universal Serial Bus (USB) is a widely used communications protocol between a computer and an external device.

In this embodiment, the USB connection-based device system 20 is configured to be connected to a USB connection-based host system.

The device physical layer (PHY) 201 is configured to implement the data transfer and the physical connection to the host physical layer.

Specifically, the device physical layer 201 defines an electrical parameter, a physical speed, and the like of a signal, and is responsible for implementing transmission and receiving of a USB signal on a physical layer.

In this embodiment, the protocol symbol rate is 480 Mbps.

In this embodiment, the symbol rate of the data transfer on the device physical layer 201 is greater than the protocol symbol rate. The symbol rate is increased to match a data transfer rate of the host system connected to the device system, so that a USB data transfer rate can be increased.

Specifically, in this embodiment, symbol rates of data transfers on a sending end and a receiving end of the device physical layer 201 are both 960 Mbps.

The symbol rates of the data transfers on the sending end and the receiving end of the device physical layer 201 are both 960 Mbps, which can match a symbol rate of a transfer on the host physical layer, thereby matching an interval of 62.5 µs between two adjacent start-of-frame packets initiated by the host controller.

The device controller 202 is configured to receive and parse the data transfer transaction from the host controller.

Specifically, in this embodiment, internal resources of a device are coordinated according to instructions of a host, to complete a control task, and the device controller 202 further ensures that the device can accurately and timely transfer data to the host.

FIG. 3 is a flowchart of an embodiment of a USB connection-based data transfer method according to the present invention.

Referring to FIG. 3, at step S1, a host controller initiates a data transfer transaction, where each data transfer transaction includes a start-of-frame packet indicating a beginning of the data transfer transaction, a USB standard-based protocol interval exists between two adjacent start-of-frame packets, and when the host controller sends a plurality of data transfer transactions, an interval between two adjacent start-of-frame packets is less than the protocol interval.

A Universal Serial Bus (USB) is a widely used communications protocol between a computer and an external device.

Specifically, in this embodiment, a USB connection-based host system is connected to a USB connection-based device system, to implement a USB connection-based data transfer.

Specifically, data is transferred by means of a plurality of data transfer transactions. Each data transfer transaction includes the start-of-frame (SOF) packet indicating the beginning of the data transfer transaction, that is, the start-of-frame packet is at the beginning of each data transfer transaction. As an example, the SOF packet includes a 11-bit frame number field, and increments every frame and rolls over once it reaches a maximum value. By parsing frame number information in the SOF packet, the host system 10 may synchronize time and detect a possible frame loss.

The USB standard-based protocol interval exists between two adjacent start-of-frame packets. That is, the SOF packets are to be sent by the host controller at a fixed time interval, to facilitate establishment of precise time synchronization between the host system 10 and the device system. The protocol interval is an interval defined based on the USB standard, and may not be an interval between two adjacent start-of-frame packets actually initiated by the host controller.

In this embodiment, in the USB connection-based data transfer method, the USB standard is USB 2.0.

Based on the USB standard of USB 2.0, a data transfer speed can be increased based on the USB 2.0, making the cost of the data transfer method in this embodiment relatively low, and eliminating the problem of surplus performance.

Correspondingly, in this embodiment, the USB standard-based protocol interval is 125 µs.

That is, the protocol interval between two adjacent start-of-frame packets is one micro-frame.

In this embodiment, the data transfer transaction is applicable to a control transfer mode, a bulk transfer mode, an interrupt transfer mode, and an isochronous transfer mode. As an example, in this embodiment, the data transfer transaction is applicable to a bulk transfer transaction.

The bulk transfer transaction is an important data transfer manner in a USB port protocol, and may be used for full-speed (FS), high-speed (HS), and super-speed (SS) USB devices. In this embodiment, the host system is configured to perform a high speed (HS) transfer. The bulk transfer is applicable to a transfer of a large amount of data.

In this embodiment, the data transfer transaction further includes a token packet, a data packet, and a handshake packet sequentially following the start-of-frame packet.

Specifically, the token packet includes an OUT packet, an IN packet, a SOF packet, and a SETUP packet, and is initiated only by the host system, where the SOF packet is the start-of-frame packet. For example, when the host system 10 initiates the OUT packet, it indicates that the device system is notified. In this case, the host system 10 sends data to the device system. The IN packet is used by the host system to request data from the device system. The SETUP packet is used only in an enumeration stage, and is used by the host system to read basic configuration information of the device system.

The data packet includes a DATA0 packet, a DATA1 packet, a DATA2 packet, and an MDATA packet. The DATA0 packet and the DATA1 packet are basic data packet identifiers, and the DATA0 packet and the DATA1 packet appear alternately in an actual data transfer. The DATA2 packet is mainly used for an isochronous transfer. The MDATA packet is used for a split transfer or an isochronous transfer.

The handshake packet includes an ACK packet, a NAK packet, a STALL packet, and an NYET packet. The ACK packet is used for telling a sender that a receiver has received data. The NAK packet is used by a receiver to tell a sender that the receiver currently cannot receive data or that a problem exists in received data. The STALL packet indicates that a current endpoint is terminated. The NYET packet indicates that a receiver does not respond.

Specifically, in this embodiment, the host controller drives initiation of the start-of-frame packet, so that an interval between two adjacent start-of-frame packets initiated by the host controller is less than the protocol interval.

In this embodiment, the interval between two adjacent start-of-frame packets initiated by the host controller is less than the protocol interval, to reduce time occupied by each data transfer transaction. In addition, a symbol rate of a data transfer between a host physical layer and a device physical layer is greater than a protocol symbol rate. The symbol rate is increased to match the shortened interval between two adjacent start-of-frame packets, increasing a USB data transfer rate without modifying a host protocol layer configured to define the host controller, thereby improving USB data transfer efficiency while keeping the cost relatively low.

In this embodiment, when the host controller sends the plurality of data transfer transactions, the interval between two adjacent start-of-frame packets is half the protocol interval.

That is, by means of driving of the host controller, the interval between two adjacent start-of-frame packets actually initiated by the host controller is enabled to be half the protocol interval.

Specifically, in this embodiment, when the host controller sends the plurality of data transfer transactions, the interval between two adjacent start-of-frame packets is 62.5 µs.

At step S2, a physical connection between a host physical layer and a device physical layer is performed to implement a data transfer, where the data transfer has a USB standard-based protocol symbol rate, and during the physical connection, a symbol rate of the data transfer is greater than the protocol symbol rate.

The host physical layer (PHY) is configured to drive a data transfer and a physical connection to the device physical layer, so that a symbol rate of a data transfer on the host physical layer is greater than the protocol symbol rate.

Specifically, the host physical layer defines an electrical parameter, a physical speed, and the like of a signal, and is responsible for implementing transmission and receiving of a USB signal on a physical layer.

The device physical layer (PHY) is configured to implement a data transfer and a physical connection to the host physical layer, so that a symbol rate of a data transfer on the device physical layer is greater than the protocol symbol rate.

Specifically, the device physical layer defines an electrical parameter, a physical speed, and the like of a signal, and is responsible for implementing transmission and receiving of a USB signal on a physical layer.

The data transfer has the USB standard-based protocol symbol rate, and during the physical connection, the symbol rate of the data transfer is greater than the protocol symbol rate, so as to match the reduced interval between two adjacent start-of-frame packets when the data transfer transaction is initiated.

In this embodiment, the protocol symbol rate is 480 Mbps.

In this embodiment, during the physical connection, the symbol rate of the data transfer is twice the protocol symbol rate.

That is, by means of driving, the actual symbol rate of the data transfer on the host physical layer is twice the protocol symbol rate.

In this embodiment, during the physical connection, the symbol rate of the data transfer is 960 Mbps.

Specifically, in this embodiment, symbol rates of data transfers on a sending end and a receiving end of the host physical layer are both 960 Mbps.

The symbol rates of the data transfers on the sending end and the receiving end of the host physical layer are both 960 Mbps, which can match the interval of 62.5 µs between two adjacent start-of-frame packets initiated by the host controller.

In this embodiment, the symbol rate of the data transfer on the device physical layer is greater than the protocol symbol rate. The symbol rate is increased to match a data transfer rate of the host system connected to the device system, so that a USB data transfer rate can be increased.

Correspondingly, in this embodiment, the symbol rate of the data transfer on the device physical layer is twice the protocol symbol rate.

That is, by means of driving, the actual symbol rate of the data transfer on the device physical layer is twice the protocol symbol rate.

Correspondingly, in this embodiment, symbol rates of data transfers on a sending end and a receiving end of the device physical layer are both 960 Mbps.

The symbol rates of the data transfers on the sending end and the receiving end of the device physical layer are both 960 Mbps, which can match the symbol rate of the transfer on the host physical layer, thereby matching the interval of 62.5 µs between two adjacent start-of-frame packets initiated by the host controller.

In this embodiment, a maximum data packet length of a bulk transfer in a high-speed mode supported by the data transfer method is 512 bytes. Correspondingly, a number of bulk data packets that can be inserted between the two adjacent start-of-frame packets initiated by the host controller is 13.

That is, in this embodiment, the interval between two adjacent start-of-frame packets initiated by the host controller is reduced to be half the interval under the USB 2.0 standard, that is, 62.5 µs. In addition, 13 bulk data packets can still be inserted between the two adjacent start-of-frame packets initiated by the host controller, thereby increasing the transfer rate to be twice of the transfer rate under the USB 2.0 standard.

Specifically, the interval between two adjacent start-of-frame packets initiated by the host controller is reduced to 62.5 µs, and upon calculation, it is found that an effective data transfer speed for each type of data payload is doubled. Moreover, in a bulk transfer transaction under the USB 2.0 standard, a micro-frame bandwidth of each transfer occupies 8%, and in the bulk transfer transaction of this embodiment, a micro-frame bandwidth of each transfer still occupies 8%. The number of transfers in a micro-frame is the same as that under the USB 2.0 standard, while a transfer speed is twice that under the USB 2.0 standard. Therefore, this embodiment enables the transfer speed to be doubled, and is completely compatible with the existing protocol of the USB 2.0 standard, keeping the cost relatively low.

In this embodiment, before the host controller initiates the data transfer transaction, the method further includes: performing a handshake match between a host system and a device system, where the handshake match has a USB standard-based protocol pulse width, and during the handshake match between the host system and the device system, the pulse width is half the protocol pulse width.

Specifically, in this embodiment, by means of driving of the host controller, the interval between two adjacent start-of-frame packets is enabled to be half the protocol interval, that is, the transfer rate is doubled. Correspondingly, during the handshake match between the host system and the device system, the pulse width can be half the protocol pulse width, that is, time of the handshake match between the host system and the device system is enabled to be halved, saving the time of the handshake match between the host system and the device system, thereby improving efficiency of the handshake match between the host system and the device system.

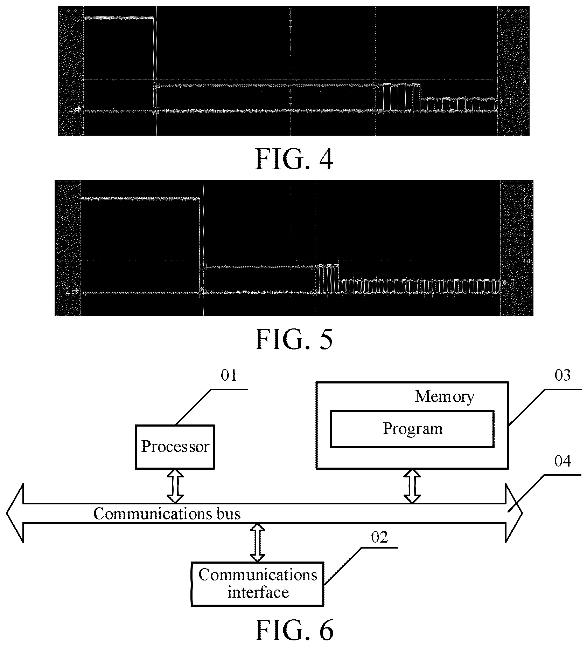

With combined reference to FIG. 4 and FIG. 5, FIG. 4 is a time-voltage pulse diagram of a handshake match between a host system and a device system based on the USB 2.0 standard, and FIG. 5 is a time-voltage pulse diagram of a handshake match between a host system and a device system based on a USB standard in this embodiment.

Referring to FIG. 4, a handshake process based on the USB 2.0 standard includes the following. When detecting that a device system is plugged in/powered on, the host system resets the plugged-in device system. In this case, differential signal lines D+ line (DP) and D-line (DM) are each at a low level. After the device system receives a reset signal, a sink current is applied to the D- line to obtain an 800 mV Chirp K signal, where duration of the Chirp K signal is 1 ms to 7 ms. After the Chirp K signal ends, the host system starts to reply with a sequence of a series of KJKJKJ, where duration of each K or J is 40 µs to 60 µs, and a reset operation ends after the KJ sequence ends. Finally, the device system is connected to a high-speed terminal resistor on the DP/DM. In this case, an amplitude of the KJ sequence is halved, so as to enter a high-speed mode.

Referring to FIG. 5, based on the USB standard in this embodiment, a process of the handshake match between the host system and the device system is the same as the foregoing handshake process based on the USB 2.0 standard. However, a pulse width of Chirp K and KJ signals is reduced to be half that under the USB 2.0 standard. Therefore, it can be seen that, with the use of the USB connection-based data transfer method in this embodiment, the time of the handshake match between the host system and the device system is halved.

The embodiments of the present invention further provide a device, where the device may be loaded with a program form of the foregoing USB connection-based data transfer method, so as to implement the USB connection-based data transfer method provided in the embodiments of the present invention. An optional hardware structure of a terminal device provided in the embodiments of the present invention may be as shown in FIG. 6, and include: at least one processor 01, at least one communications interface 02, at least one memory 03, and at least one communications bus 04.

In this embodiment, there are at least one processor 01, at least one communications interface 02, at least one memory 03, and at least one communications bus 04, and the processor 01, the communications interface 02, and the memory 03 communicate with each other by means of the communications bus 04. The communications interface 02 may be an interface of a communications circuit configured to perform network communications, for example, an interface of a Global System for Mobile Communications (GSM) circuit. The processor 01 may be a central processing unit (CPU), an application specific integrated circuit (ASIC), or one or more integrated circuits configured to implement the embodiments of the present invention. The memory 03 may include a high-speed random access memory (RAM) memory, or may include a non-volatile memory (NVM), for example, at least one disk memory. The memory 03 stores one or more computer instructions, where the one or more computer instructions are executed by the processor 01 to implement the USB connection-based data transfer method provided in the embodiments of the present invention.

It should be noted that, the foregoing implementation terminal device may further include another component (not shown) that may not be necessary for the disclosure of the embodiments of the present invention. The other components may not be necessary for understanding the disclosure of the embodiments of the present invention, and are not described one by one in the embodiments of the present invention.

The embodiments of the present invention further provide a storage medium, storing one or more computer instructions, where the one or more computer instructions are used for implementing the USB connection-based data transfer method provided in the embodiments of the present invention.

The embodiments of the present invention further provide a computer program product, including a computer program/instructions, where the computer program/instructions, when executed by a processor, implement the USB connection-based data transfer method provided in the embodiments of the present invention.

In this embodiment, the interval between two adjacent start-of-frame packets initiated by the host controller is less than the protocol interval, to reduce time occupied by each data transfer transaction. In addition, a symbol rate of a data transfer between a host physical layer and a device physical layer is greater than a protocol symbol rate. The symbol rate is increased to match the shortened interval between two adjacent start-of-frame packets, increasing a USB data transfer rate without modifying a host protocol layer configured to define the host controller, thereby improving USB data transfer efficiency while keeping the cost relatively low.

The implementations of the present invention described above are a combination of elements and features of the present invention. Unless otherwise specified, the elements or features may be considered to be optional. Each element or feature may be implemented without being combined with another element or feature. In addition, the implementations of the present invention may be configured by combining a part of elements and/or features. The order of operations described in the implementations of the present invention may be rearranged. Some configurations of any implementation may be included in another implementation and may be replaced with corresponding configurations of another implementation. It is apparent to those skilled in the art that, in the appended claims, claims with no explicit reference to each other may be combined to form an implementation of the present invention, or may be included as new claims in modifications made after the filing of the present application.

The implementations of the present invention can be implemented by various means such as hardware, firmware, software, or a combination thereof. In a hardware configuration mode, the method according to the exemplary implementations of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like. In a firmware or software configuration mode, the implementations of the present invention may be implemented in the form of circuits, processes, functions, and the like. Software code may be stored in a memory component and executed by a processor. The memory component is located inside or outside the processor and can send data to and receive data from the processor by various known means.

The above description of the disclosed embodiments enables those skilled in the art to implement or use the present invention. Various modifications made to these embodiments will be apparent to those skilled in the art, and the general principles defined herein can be implemented in other embodiments without departing from the spirit or scope of the present invention. Therefore, the present invention is not limited to these embodiments illustrated herein, but conforms to the broadest scope consistent with the principles and novel features disclosed in the present invention.

Although the present invention is disclosed above, the present invention is not limited thereto. Any person skilled in the art can make various changes and modifications without departing from the spirit and scope of the present invention. Therefore, the protection scope of the present invention shall be subject to the scope defined by the claims.

## Claims

1. A USB connection-based host system, comprising:
a host protocol layer configured to define a data transfer transaction initiated by a host controller, wherein each data transfer transaction comprises a start-of-frame packet indicating a beginning of the data transfer transaction, the host protocol layer is further configured to define a protocol interval between two adjacent start-of-frame packets, and the host protocol layer is further configured to define a protocol symbol rate for a data transfer on a host physical layer;
the host controller configured to drive initiation of the start-of-frame packet, so that an interval between two adjacent start-of-frame packets initiated by the host controller is less than the protocol interval; and
the host physical layer configured to drive a data transfer and a physical connection to a device physical layer, so that a symbol rate of the data transfer on the host physical layer is greater than the protocol symbol rate.

2. The USB connection-based host system according to claim 1, wherein the interval between two adjacent start-of-frame packets initiated by the host controller is half the protocol interval.

3. The USB connection-based host system according to claim 2, wherein the protocol interval between two adjacent start-of-frame packets that is defined by the host protocol layer is 125 µs; and
the interval between two adjacent start-of-frame packets initiated by the host controller is 62.5 µs.

4. The USB connection-based host system according to claim 1, wherein the symbol rate of the data transfer on the host physical layer is twice the protocol symbol rate.

5. The USB connection-based host system according to claim 1, wherein a maximum data packet length of a bulk transfer in a high-speed mode supported by the host system is 512 bytes; and
a number of bulk data packets that can be inserted between the two adjacent start-of-frame packets initiated by the host controller is 13.

6. The USB connection-based host system according to claim 1, wherein the data transfer transaction defined by the host protocol layer is applicable to a control transfer mode, a bulk transfer mode, an interrupt transfer mode, and an isochronous transfer mode.

7. A device system connected to the host system according to any one of claims 1 to 6, comprising:
a device physical layer configured to implement a data transfer and a physical connection to the host physical layer, so that a symbol rate of the data transfer on the device physical layer is greater than the protocol symbol rate; and
a device controller configured to receive and parse a data transfer transaction from the host controller.

8. The device system according to claim 7, wherein the symbol rate of the data transfer on the device physical layer is twice the protocol symbol rate.

9. A USB connection-based data transfer method, comprising:
initiating, by a host controller, a data transfer transaction, wherein each data transfer transaction comprises a start-of-frame packet indicating a beginning of the data transfer transaction, a USB standard-based protocol interval exists between two adjacent start-of-frame packets, and when the host controller sends a plurality of data transfer transactions, an interval between two adjacent start-of-frame packets is less than the protocol interval; and
performing a physical connection between a host physical layer and a device physical layer to implement a data transfer, wherein the data transfer has a USB standard-based protocol symbol rate, and during the physical connection, a symbol rate of the data transfer is greater than the protocol symbol rate.

10. The USB connection-based data transfer method according to claim 9, wherein when the host controller sends the plurality of data transfer transactions, the interval between two adjacent start-of-frame packets is half the protocol interval.

11. The USB connection-based data transfer method according to claim 9, wherein during the physical connection, the symbol rate of the data transfer is twice the protocol symbol rate.

12. The USB connection-based data transfer method according to claim 10, before the initiating, by a host controller, a data transfer transaction, further comprising: performing a handshake match between a host system and a device system, wherein the handshake match has a USB standard-based protocol pulse width, and during the handshake match between the host system and the device system, a pulse width is half the protocol pulse width.

13. A device, comprising at least one memory and at least one processor, wherein the memory stores one or more computer instructions, and the one or more computer instructions are executed by the processor to implement the USB connection-based data transfer method according to any one of claims 9 to 12.

14. A storage medium, storing one or more computer instructions, wherein the one or more computer instructions are used for implementing the USB connection-based data transfer method according to any one of claims 9 to 12.

15. A computer program product, comprising a computer program/instructions, wherein the computer program/instructions, when executed by a processor, implement the USB connection-based data transfer method according to any one of claims 9 to 12.
